# EUROPEAN PATENT APPLICATION

(11) **EP 4 197 616 A1**
(43) Date of publication of application: **21.06.2023**
(21) Application number: 21215089.0
(22) Date of filing: 16.12.2021
(51) Int. Cl.: B01D 35/143, B01D 35/30

(54) **FLUID HANDLING SYSTEM, CARTRIDGE THEREFOR AND METHOD OF MANUFACTURING A RANGE OF THE CARTRIDGES**

(71) Applicant: BRITA SE, 65232 Taunusstein (DE)
(72) Inventor: BUT, Alexej, 49846 Hoogstede (DE); HÖRNING, Thomas, 65529 Waldems (DE); SCHÖNECK, Joris, 64646 Heppenheim (DE); WEIDNER, Peter, 92444 Rötz (DE); HEEP, Mario, 65553 Limburg (DE); CONRADT, Berthold, 65205 Wiesbaden (DE); RAZIN, Denis, 65199 Wiesbaden (DE); BUBINGER, Michael, 65191 Wiesbaden (DE)

(57) **Abstract**

A cartridge for handling a fluid comprises a housing comprising an impermeable shell in which at least one port (8-10) for the fluid is formed. The housing comprises a cartridge head comprising at least one of the ports (8-10). The cartridge head is arranged for coupling to a head part (6) to place those of the ports (8-10) comprised in the cartridge head in sealed fluid communication with ports (32,33) of the head part (6). The cartridge comprises a transponder (19), comprising at least a wireless transceiver (22,23) and a data processing device (22) for processing data exchanged via the wireless transceiver. The transponder (19) is arranged in at least one of a recess (14) in the shell and a recess (20) in a shielding part (17) joined to the shell. The transponder (19) is arranged between an exterior surface (16) of the shell and the shielding part (17).

## Description

The invention relates to a cartridge for handling a fluid, comprising:
a housing comprising an impermeable shell in which at least one port for the fluid is formed,
wherein the housing comprises a cartridge head comprising at least one of the ports,
the cartridge head being arranged for coupling to a head part to place those of the ports comprised in the cartridge head in sealed fluid communication with ports of the head part; and
a transponder, comprising at least a wireless transceiver and a data processing device for processing data exchanged via the wireless transceiver.

The invention also relates to a fluid handling system comprising a head part and at least one such cartridge.

The invention also relates to a method of manufacturing a range of such cartridges.

US 8,242,893 B1 discloses a filter assembly including a filter housing and a filter cartridge. The filter housing includes a shell, a hollow interior cavity defined by the shell, an inlet or outlet fitting, a cartridge fitting saddle, an RFID (Radio Frequency Identification Device) reader and a blocker. The interior cavity is configured to receive the filter cartridge. The filter cartridge includes a cartridge housing and an RFID tag. The filter cartridge also includes a filter and inlet/outlet fittings.

The RFID tag is shown only schematically, but appears to be of the type in which a chip and antenna are laminated in foil adhered to the object to be tagged, i.e. the cartridge housing.

A problem of the known cartridge is that the RIFD tag is liable to be damaged, because the tag is provided on a hard exterior surface of the cartridge housing. This surface will not yield if an external object, e.g. a sharp object, hits the tag. A further problem is that the tag can be removed by a user relatively easily.

It is an object of the invention to provide a cartridge, fluid handling system and method of the types mentioned above that ensure with relatively high certainty that the transponder remains functional.

This object is achieved according to a first aspect by the cartridge according the invention, which is characterised in that the transponder is arranged in at least one of a recess in the shell and a recess in a shielding part joined to the shell, and in that the transponder is arranged between an exterior surface of the shell and the shielding part.

Because the transponder is arranged between an exterior surface of the shell and the shielding part, the transponder is not arranged inside the cartridge housing. This means that there is less need to provide the transponder with shielding protecting the wireless transceiver components and data processing device from the fluid. The shell is impermeable to the fluid, but the recess or recesses need not form a hermetically sealed cavity. Furthermore, the shell can be made to allow the cartridge housing to withstand relatively high fluid pressures. Because the transponder is not arranged inside the cartridge housing, the shell will not adversely affect the wireless signal, nor need the shell be provided with a window allowing the wireless signal to pass. The wireless transceiver can also be positioned closer to the reader or transceiver with which the data is to be exchanged. Because the transponder is arranged in a recess in at least one of the shell and the shielding part, the shielding part shields the transponder from external impacts. The transponder itself need not be provided with a thick housing. The recess defines a space, so that the shielding part can be joined to the shell around the transponder. The shielding part will not conform in shape to the exterior surface of the shell, and can thus be relatively rigid. The shielding part can be made of a different material from that of the shell, e.g. selected with a view to low attenuation of the wireless signal, whereas the shell material will generally be selected to achieve high burst strength. The shielding part can also be configured to modify the surface shape of the shell, e.g. by being provided with a relief and/or indentations on a side facing away from the shell. This allows for individualisation of cartridges of which the housing exterior is otherwise identical. A further effect of the recess is that the recess defines a position for the transponder, thereby eliminating a potential source of manufacturing error. A tag merely stuck onto a cartridge can be stuck on at an incorrect location, which may impair the wireless exchange of data.

The cartridge is for handling a fluid. The fluid may be a liquid, a gas or a mixture. Handling may comprise treatment of the fluid, in which case the ports comprise at least one inlet port and at least one outlet port. Handling may comprise only delivery of fluid stored in the cartridge, in which case an outlet port suffices. In the former case, the head part is arranged to deliver fluid to be treated to the cartridge and receive the treated fluid. In the latter case, the head part is arranged to receive the fluid. The head part will generally be of the type connected to conduits for delivery of fluid to a fluid-consuming appliance or fluid dispenser. The shell comprised in the cartridge housing may be made in more than one piece, as will be explained. The cartridge housing will comprise further components, such as sealing elements, flow conductors and the like.

In an embodiment, the shielding part is formed by a rigid part.

This means that the shielding part is unable to conform to the exterior surface of the shell, or the shape of the transponder, when subjected to a force pressing the shielding part towards the shell. The transponder is protected relatively well and can itself have a relatively simple housing or comprise components arranged on a carrier without further encapsulation.

In an embodiment, the transponder occupies at least part of a space at least partly bounded by the exterior surface of the shell and by the shielding part. There are thus no other components between the transponder and the exterior surface or shielding part, although the transponder may have its own housing. This simplifies manufacturing. Where the transponder occupies only part of the space, a level of insulation against mechanical and thermal influences is provided. This may in particular be of use during manufacturing, when the shielding part is joined to the cartridge housing, e.g. by thermal or ultrasonic welding.

In an embodiment, the transponder is located between the shielding part and an exterior surface of a section of the shell defining the cartridge head.

The transponder is thus located in a part of the cartridge that is coupled to the head part. The head part can be relatively small such as to provide only a mechanical interface for coupling with the cartridge head. In the coupled state, the remainder of the cartridge need not be positioned adjacent the head part. The head part can in this embodiment also serve as a housing or support for a reader or transceiver arranged to exchange data with the transponder. The distance between the transponder and the reader or transceiver is then relatively short.

In an example of this embodiment, a mechanical key for avoiding false coupling to the head part is formed on an exposed side of the shielding part.

Thus, the shielding part fulfils two functions, namely to protect the transponder and individualise the cartridge housing. A head part with a cartridge recognition component having a shape that is complementary to the mechanical key will either not couple correctly to the cartridge or couple and not function correctly, e.g. not permit fluid to flow between the cartridge and the head part. Because the cartridge can be differentiated both by the mechanical key shape and information stored or processed by the transponder, a relatively large number of different identifiers can be provided. It is also possible to use one as a cross-check on or duplication of the other. For example, the head part can be provided at user premises and a distributor can use a wireless reader or transceiver to determine the destination of the cartridge. The shielding part provides a relatively large volume of material in which a mechanical key can be formed. Because the shielding part is in any case a part formed separately from the shell, the shell, or at least the section forming the cartridge head, can be shaped and dimensioned identically for a range of different cartridges. Differentiation in shape is achieved with the shielding part, which is relatively small and inexpensive to manufacture. The basic shape of the shielding part can be relatively simple, because the mechanical key is formed at the surface and, in contrast to the remainder of the cartridge housing, the shielding part need not fulfil any function in handling the fluid. The exposed side of the shielding part is the side exposed to the environment of the cartridge. This side is accessible to external objects.

In a particular example of any embodiment in which the transponder is located between the shielding part and an exterior surface of a section of the shell defining the cartridge head and a mechanical key for avoiding false coupling to the head part is formed on an exposed side of the shielding part, the shielding part is provided with a planar exterior surface on the exposed side, and the key is defined by at least one space recessed with respect to the planar surface.

In contrast to a key defined by a relief, there need be fewer or no parts protruding with respect to the cartridge housing. This simplifies handling of the cartridge, because there are fewer parts that may accidentally be caught behind other objects during handling.

In an example of any embodiment in which the transponder is located between the shielding part and an exterior surface of a section of the shell defining the cartridge head and a mechanical key for avoiding false coupling to the head part is formed on an exposed side of the shielding part, at least a part of the cartridge head is arranged for insertion in an insertion direction into a cavity of the head part, and the key is defined by at least one recessed space accessible from an opposite direction to the insertion direction to a projection of a cartridge recognition component in the head part.

This is a simple way of implementing cartridge recognition, in that an improper cartridge cannot be fully inserted. Conversely the cartridge cannot be inserted into an improper head part. The projection will block movement in the insertion direction.

In an embodiment of the cartridge, the transponder is arranged in a recess in the shell, at least partly closed at a mouth by the shielding part.

The result is a relatively smooth surface. The shielding part can be flush with the exterior surface of the shell at at least the edge of the mouth, for example. In case of full closure of the recess at the mouth, the transponder is shielded from liquid. Otherwise, the transponder is still shielded from mechanical impacts.

In a particular example of this embodiment, the shielding part comprises an insert at least partly inserted into the recess.

The shielding part can still extend some way into the recess, so that the shielding part provides enough material in which a mechanical key can be defined, if required. In any case, the shielding part is relatively difficult to remove, thus reducing the risk of tampering.

In an embodiment of the cartridge, the wireless transceiver is arranged to operate in a frequency band of the electromagnetic spectrum located between 8 kHz and 2.5 MHz.

It is noted that the frequency band need not, indeed generally will not, extend between 8 kHz and 2.5 MHz. Suitable bands include 9-148.5 kHz (LF), a 14 kHz band around 13.56 MHz (HF), 865-868 kHz (UHF) and 2400-2483.5 MHz (microwave). The transceiver in this embodiment is thus arranged to operate in the radio-frequency or microwave-frequency part of the spectrum. The shielding part need not be optically transparent, nor need there be an unobstructed optical path between the transponder and a reader or transceiver. The wireless transceiver of this embodiment may be a passive transceiver, so that the transponder need not comprise a battery or other power source. Due to the arrangement of the transponder outside the shell, the wireless transceiver need not have a very large range. A band around 13.56 MHz is used in Near-Field Communication (NFC) devices, which are available relatively widely and at relatively low costs.

In an example of this embodiment, the shielding part comprises at least one feature for shaping an electromagnetic field.

Thus, the wave beam may be shaped to optimise the signal strength in a particular direction. The feature may comprise a hollow space, which may be closed or open. This type of feature avoids the need to manufacture the shielding part from more than one material.

In an embodiment of the cartridge, the transponder comprises components comprising at least an antenna and at least one electrical circuit, and at least one of these components is supported on a carrier distinct from the shell and the shielding part.

This embodiment simplifies manufacturing. The components on the carrier can be placed in the recess in the shell or shielding part and the shielding part then joined to the shell. The assembly of carrier and components can be manufactured at a different location by a supplier, for example.

In an example of this embodiment, the carrier comprises a foil.

A transponder with this type of carrier is relatively easy to handle during manufacturing and relatively low-cost. The foil offers a relatively large area on which an antenna can be supported. The antenna can, for example, be printed on the foil, e.g. screen printed, or etched. In an embodiment, the antenna is a coil antenna (i.e. arranged in a loop on the foil). The components may be laminated between the foil and one or more cover foils.

In an embodiment of the cartridge, the shielding part is provided with an antenna.

The antenna may be integrated in or supported by the shielding part. The antenna need not be directly connected to the oscillator circuit of the wireless transceiver, but may be arranged to re-direct or concentrate the signal from the wireless transceiver.

In an embodiment of the cartridge, the shielding part is joined to the shell by one of adhesive bonding and welding.

This embodiment is useful in preventing tampering and may also be used to encapsulate the transponder in a watertight manner. Features for mechanical joining need not be formed on the shielding part or shell, which simplifies manufacturing.

In an embodiment of the cartridge, the cartridge is a liquid treatment cartridge, the ports formed in the shell, e.g. the ports comprised in the cartridge head, comprise at least one liquid inlet port and at least one liquid outlet port, at least one liquid treatment component is arranged in an interior of the shell, and the liquid treatment cartridge comprises at least one flow conducting part for conducting liquid through the liquid treatment component from the at least one liquid inlet port to the at least one liquid outlet port.

The transponder can be used to process, e.g. store, information identifying at least one of the type, amount and state of the liquid treatment medium or media. State includes the amount of liquid that has passed through the liquid treatment medium or media. This provides a way of monitoring the need to replace the cartridge. Where the information identifies the type of liquid treatment medium or media, use of an incorrect cartridge can be avoided or settings of the head part can be adapted, for example. Identifying the amount of liquid treatment medium or media, or equivalently the size of the cartridge, allows to differentiate between cartridges of the same type with different capacities.

In an embodiment of the cartridge, the shell comprises:
a vessel-shaped component; and
a cap-shaped component, closing a mouth of the vessel-shaped component and comprising the cartridge head.

This embodiment offers the potential for increased manufacturing efficiency. A manufacturer can manufacture one variant of cap-shaped component and multiple variants of vessel-shaped component, each with a different volume. These may vary only in length, for example. The transponder can be arranged to communicate data specifying the size. Where the shielding part comprises an exposed surface in which a mechanical key for avoiding false coupling to the head part is formed, the key can alternatively or additionally be used for differentiation purposes.

According to a second aspect, the fluid handling system according to the invention comprises:
a head part;
at least one cartridge according to the invention; and
a data processing system comprising at least a reader for obtaining data from the transponder of the cartridge.

The data processing system may additionally be arranged to write data to the transponder for storage in a memory unit of the transponder. The data processing system may be comprised in or supported by the head part or provided in a separate housing near the head part. The data processing system may also be split in the sense that the reader is located in the head part and certain data processing devices are located remotely from the head part and connected to the parts of the data processing system located in the head part via a data communications link.

In an embodiment of the fluid handling system, a mechanical key is formed on an exposed side of the shielding part of the cartridge, the head part comprises a cartridge recognition component having a complementary shape to the key, and the key and the cartridge recognition component are arranged to co-operate to avoid false coupling of the cartridge head of the cartridge to the head part.

Thus, the shielding part fulfils two functions, namely to protect the transponder and individualise the cartridge housing. Avoidance of false coupling may entail that a head part with a cartridge recognition component having a shape that is not complementary to the mechanical key will not couple correctly to the cartridge or that the head part will couple but not function correctly, e.g. not permit fluid to flow between the cartridge and the head part. Because the cartridge can be differentiated both by the mechanical key shape and information stored or processed by the transponder, a relatively large number of different identifiers can be provided. Additionally, it can be ensured that the reader will only attempt or be able to communicate with a compatible transponder.

In an example of this embodiment, the head part comprises a cavity into which at least a part of the cartridge head is arranged to be inserted in an insertion direction when the cartridge head is coupled to the head part, the cartridge recognition component comprises a projection into an interior of the cavity, and the key is at least partly defined by a recessed space accessible to the projection from an opposite direction to the insertion direction.

Thus, only a cartridge with a shielding part provided with a compatible mechanical key will be fully insertable. Other cartridges will not reach a defined end position.

In a particular example of this embodiment, the head part comprises a locking part movable into a position of engagement with the cartridge head to prevent retraction of the cartridge head from the cavity in a direction opposite to the insertion direction, and the locking part is movable into the position of engagement only when the cartridge is in a position in which the projection has entered the recessed space.

Thus, the fact that the cartridge is incompatible and therefore not able to reach a fully inserted position is made clear by the fact that the locking part cannot engage.

In a particular example of any embodiment in which a mechanical key is formed on an exposed side of the shielding part of the cartridge, the head part comprises a cartridge recognition component having a complementary shape to the key, the key and the cartridge recognition component are arranged to co-operate to avoid false coupling of the cartridge head of the cartridge to the head part, the head part comprises a cavity into which at least a part of the cartridge head is arranged to be inserted in an insertion direction when the cartridge head is coupled to the head part, the cartridge recognition component comprises a projection into an interior of the cavity, and the key is at least partly defined by a recessed space accessible to the projection from an opposite direction to the insertion direction, wherein the head part comprises a locking part movable into a position of engagement with the cartridge head to prevent retraction of the cartridge head from the cavity in a direction opposite to the insertion direction, and the locking part is movable into the position of engagement only when the cartridge is in a position in which the projection has entered the recessed space, the head part comprises at least one valve for controlling fluid flow, e.g. fluid flow between the cartridge and the head part, and the valve is controlled by a movable valve actuating part of which the movement is coupled to movement of the locking part.

Thus, the ability of the fluid to flow is subject to a cartridge of the correct type being fully inserted into place. Separate indicators allowing a user to verify that this is the case are not required. Where the flow is between the cartridge and the head part, leakages can be prevented.

In an embodiment of the fluid handling system, the data processing system is arranged to evaluate at least one data item obtained from the transponder and to cause a flow of fluid between the head part and the cartridge to be adapted in dependence on a result of the evaluation.

Causing the flow of fluid to be adapted may comprise enabling or disabling the flow of fluid. Alternatively, the rate of flow may be changed.

According to another aspect, the invention provides a method of manufacturing a range of cartridges according to the invention, wherein at least a section of the shell comprised in the cartridge head of each of the cartridges has a common shape and dimensions, and wherein the shielding parts joined to the respective shells of at least two of the cartridges differ in shape.

The different shape may in particular be due to a mechanical key defined by the shielding part for engaging a cartridge recognition component having a complementary shape. This is an efficient way of differentiating between cartridges that otherwise have housings of which at least the cartridge heads have the same shapes and dimensions.

The invention will be explained in further detail with reference to the accompanying drawings, in which:
- Fig. 1: is a perspective view of a cap-shaped component of a shell comprised in a cartridge housing;
- Fig. 2: is a perspective view of a vessel-shaped component of a shell comprised in a cartridge housing;
- Fig. 3: is a side view of a cartridge head comprised in the cartridge housing;
- Fig. 4: is a top perspective view of the cartridge head showing a keyed shielding part;
- Fig. 5: is a second top perspective view of the cartridge head without the keyed shielding part;
- Fig. 6: is a perspective view of the cartridge coupled to a head part to form a liquid treatment system;
- Fig. 7: is a cross-sectional view of the head part;
- Fig. 8: is a perspective view of the keyed shielding part from a side on which a transponder is arranged;
- Fig. 9: is a perspective view of the keyed shielding part from the same side as Fig. 8 without the transponder; and
- Fig. 10: is a perspective view from a different angle of the keyed shielding part.

In the following, a fluid handling system in the form of a liquid treatment system comprising at least one cartridge 1 for the treatment of an aqueous liquid such as mains drinking water will be described. The liquid treatment cartridge 1 contains at least one liquid treatment component arranged in an interior of a shell forming part of a housing of the cartridge 1.

The liquid treatment component may be configured for altering the composition of the treated liquid, in particular by removing or replacing dissolved substances or components of the liquid. Examples include treatment of liquid by a diffusive process such as adsorption or ion exchange, or a combination of such treatments. Suitable treatment media include activated carbon, inorganic adsorbents and ion exchange resins. The latter may be used for water softening or the reduction of carbonate (temporary) hardness and/or to regulate the acidity of the treated aqueous liquid. The liquid treatment component may also be arranged to filter the liquid to remove particles suspended therein.

The liquid treatment component may include a hollow, porous, liquid-permeable block comprising liquid treatment material. The liquid treatment material of such a block may be granular, fibrous, or a mixture of the two. The liquid treatment material may be thermally bonded by a binder, e.g. a particulate binder. The liquid treatment material may include a sorbent, e.g. an adsorbent such as activated carbon or a sorbent for binding heavy metals. The liquid treatment material may further include an ion exchange resin. The flow of liquid may be radially inwards into the hollow part of the block or radially outwards from the hollow part of the block.

The liquid treatment component may also include a bed of liquid treatment material and at least one flow conductor part for conducting liquid through an interior of the cartridge 1 to a first end of the bed, from where the liquid is arranged to flow through the bed. The liquid treatment material is essentially loose material. The material may be granular, fibrous or a mixture of the two. The material will generally be arranged to treat liquid by means of a diffusive process, e.g. sorption, elution or ion exchange. The material may in particular include weakly acidic ion exchange resin at least partly in the hydrogen form.

A further fraction of the weakly acidic ion exchange resin may be in the potassium form to regulate the acidity of the treated liquid.

The liquid treatment component may further include one or more salts to be dissolved into the liquid so as to increase the mineral contents thereof.

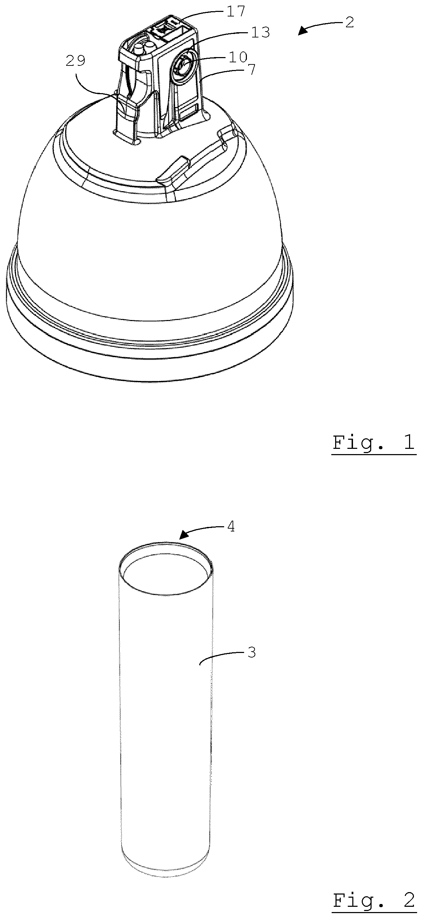

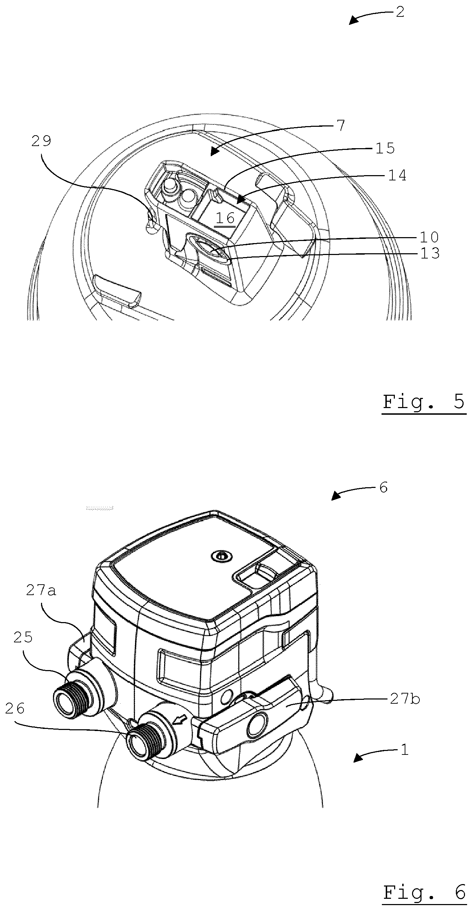

In the illustrated embodiment, the cartridge 1 (Fig. 6) comprises a housing comprising a liquid-impermeable shell. The shell comprises a cap-shaped part 2 (Figs. 1 and 3-5) and a vessel-shaped part 3 (Fig. 2). The cap-shaped part 2 is joined to the vessel-shaped part 3 at a mouth 4 of the vessel-shaped part 3, e.g. by bonding, welding or a combination thereof. Ultrasonic welding is one possibility.

A manufacturer may manufacture the cartridge 1 in a range of sizes by manufacturing the vessel-shaped part 3 in various lengths, the length being the dimension from the mouth 4 to an opposite end of the vessel-shaped part 3. That opposite end will correspond to an end of the cartridge housing and will generally be closed.

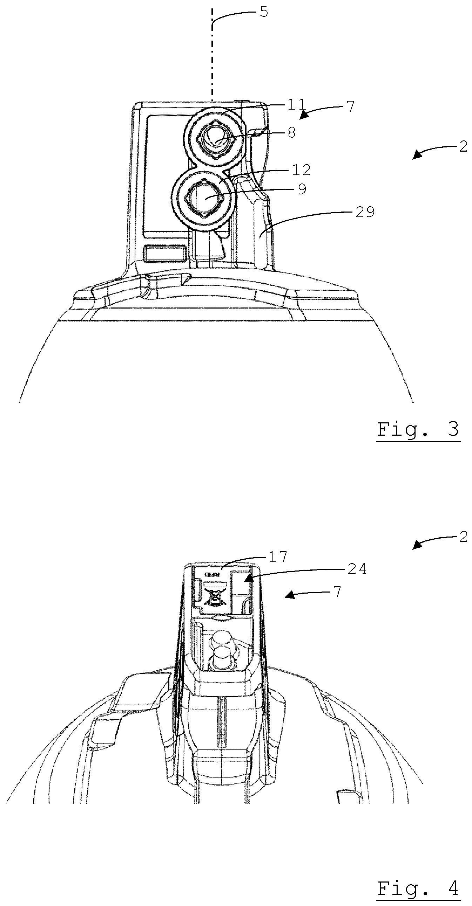

It is convenient to define a reference axis 5 (Fig. 3) coinciding with the direction from the closed end of the cartridge housing to the opposite end of the cartridge housing. The axial direction corresponds to the direction of coupling of the cartridge 1 to a head part 6 to be described in further detail below.

The cap-shaped part 2 comprises a generally dome-shaped part from which a cartridge head section 7 projects. This cartridge head section 7 has more limited lateral dimensions than the vessel-shaped part 3 or the base of the dome-shaped part of the cap-shaped part 2. The projecting cartridge head section 7 is arranged to be coupled to the head part 6, which can therefore be relatively compact. The remainder of the cartridge housing protrudes from the head part 6 in the coupled stated.

In the illustrated embodiment, the projecting cartridge head section 7 includes two cartridge inlet ports 8,9 (Fig. 3) and one cartridge outlet port 10 (Figs. 1 and 5). Liquid entering one of the cartridge inlet ports 8,9 is led through multiple liquid treatment components. Liquid entering the other of the two cartridge inlet ports 8,9 is led through the interior of the cartridge housing along a flow path that bypasses at least one of the liquid treatment components. The bypassed liquid treatment component may comprise ion exchange resin in the hydrogen form, for example. The flows of liquid are combined into a single flow that leaves the cartridge 1 through the cartridge outlet port 10. The ports 8-10 are provided with surrounding seats 11-13 for sealing elements (not shown). In an alternative embodiment, substantially flat sealing surfaces for co-operation with sealing elements of the head part 6 are provided around the ports 8-10. In yet another embodiment, integral sealing elements, e.g. obtained by multi-material injection moulding, are provided.

The ports 8-10 are provided in respective wall sections of the projecting cartridge head section 7 that each face in a lateral direction with respect to the reference axis 5. Thus, the ports 8-10 can be relatively large without increasing the lateral dimensions of the projecting cartridge head section 7. The wall sections may slope to provide the projecting cartridge head section 7 with a shape that tapers towards the axial end of the cartridge housing.

A recess 14 (Fig. 5) is provided in the cartridge head, in this case the projecting cartridge head section 7. The recess 14 has a mouth 15 facing in axial direction (i.e. the direction of coupling to the head part 6). A bottom of the recess 14 defines a surface section 16 that is a section of an exterior surface of the shell. The interior of the recess 14 is thus separated from the interior of the shell by the shell wall.

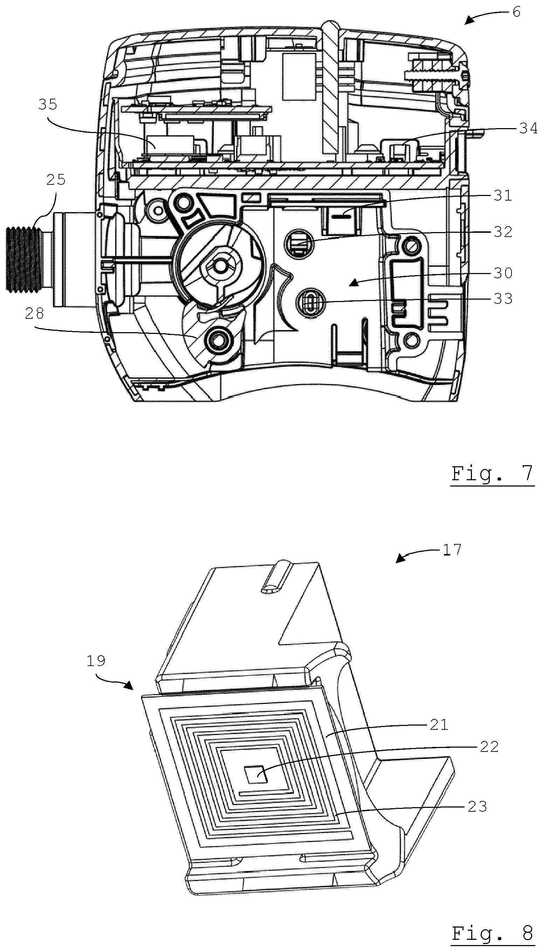

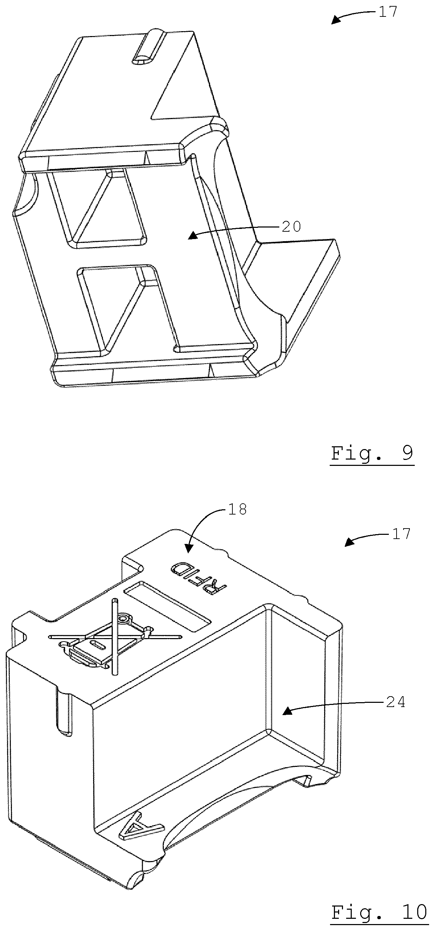

The cartridge housing comprises a shielding part 17 (Figs. 8-10) distinct from the cartridge head. In the illustrated embodiment, the shielding part 17 is an insert. The shielding part 17 is sunk into the recess 14, so that an edge of an outward-facing surface 18 is flush with an edge of the cartridge head recess 14 at the mouth 15 of the cartridge head recess 14.

The shielding part 17 is a rigid part. The shielding part 17 does not therefore change shape to an appreciable extent, having regard to the overall dimensions of the shielding part 17 and the cartridge head recess 14, when subjected to an external force. The shielding part 17 may be made of plastic. The material of the shielding part 17 may be the same as that of the shell of the cartridge housing, or the materials of these two parts may differ.

The shielding part 17 is joined to the shell, in this case the cap-shaped part 2. The joint may be formed by adhesive bonding or welding. Ultrasonic welding may be used where both parts 2,17 are made of plastic.

A transponder 19 (Fig. 8) is arranged between the surface section 16 at the bottom of the recess 14 in a recessed part 20 of the shielding part 17. The transponder 19 occupies at least part of a space at least partly bounded by the surface section 16 at the bottom of the recess 14 and the shielding part 17. In the illustrated embodiment, this space is only partly bounded, because the transponder 19 is not completely encapsulated by the cartridge head and the shielding part 17. The shielding part 17 provides mechanical protection and protection against tampering with or removal of the transponder 19. In alternative embodiments, the space at least partly occupied by the transponder 19 may be sealed. For example, the shielding part 17 may seal the cartridge head recess 14 at the mouth 15 of the cartridge head recess 14.

The transponder 19 comprises at least one foil 21 supporting components including a chip 22 and an antenna 23. These components may be laminated between foils. The antenna 23 may be printed onto the foil 21 or obtained by plating and etching, for example. The major surfaces of the foil 21 faces in axial direction in this example. The antenna 23 is in the form of a coil. In the example, an oscillator circuit is integrated into the chip 22. The oscillator circuit and antenna form a wireless transceiver, in the illustrated embodiment of the passive type and operating in a band in the radio-frequency part of the electromagnetic spectrum. This may be a band around a frequency of 13.56 MHz, for example. The chip 22 includes a non-volatile memory unit to which data can be written and from which data can be read. The data may include at least one of data uniquely identifying the cartridge 1 (e.g. a serial number), data identifying the type or types of liquid treatment component comprised in the cartridge 1, the volume of liquid that has been treated by one or more liquid treatment components or that has passed through the cartridge 1, the date of first use, at least one of the remaining lifetime and the remaining treatment capacity of the cartridge 1, etc.

The carrier, in this case the foil 21, is distinct from the shielding part 17 and the shell of the cartridge housing. Indeed, the transponder need not be bonded to either of them, since the shielding part 17 holds the transponder 19 in the cartridge head recess 14 and the shielding part 17 is joined to the shell.

A mechanical key for avoiding false coupling to the head part 6 is defined on an exposed side of the shielding part 17, i.e. the side of the outward-facing surface 18. In the illustrated embodiment, the key is defined by a single space 24 recessed with respect to the outward-facing surface 18. This space 24 is accessible from an axial direction opposite to the direction in which the outward-facing surface 18 faces. In other embodiments, there may be multiple key spaces, each accessible from an axial direction opposite to the direction in which the outward-facing surface 18 faces.

The shielding part 17 may serve as carrier for one or more electrically conducting structures (not shown), e.g. antennas, that shape the electromagnetic waves transmitted to or by the antenna 23 of the transponder. Additionally or alternatively, beam-shaping features (not shown) may be comprised in the shielding part 17.

The head part 6 (Figs. 6, 7) comprises an inlet connector 25 and an outlet connector 26 for connecting the head part 6 to conduits (not shown) for delivering liquid to be treated and returning treated liquid, e.g. to a dispensing device, a beverage maker or a device for generating steam.

The head part 6 is provided with levers 27a,b. The levers 27a,b are coupled to parts for actuating a locking device and a valve. The locking device serves to lock the cartridge 1 in an operative position when coupled to the head part 6, such as to prevent decoupling. The valve serves to regulate a flow of liquid from the inlet connector 25 to the cartridge 1 and back to the outlet connector 26. Because the movements of the actuating parts are coupled, the flow of liquid is only fully enabled when the locking device is in a locked configuration. In other configurations, the flow of liquid is blocked or reduced.

In the illustrated embodiment, the locking device comprises one or more movable locking elements 28 arranged to engage a respective locking feature 29 formed on the cartridge head, in this case the projecting cartridge head section 7.

To couple the cartridge 1 to the head part 6, the projecting cartridge head section 7 is inserted into a head part cavity 30 in an axial direction. The locking device is in the unlocked configuration during insertion. The operative position can only be reached if one or more protruding parts of a cartridge recognition component 31 are able to enter the space 24 of the mechanical key with which the shielding part 17 is provided. Otherwise, the cartridge 1 will stop short of the operative position. Only in the operative position is it possible for the locking elements 28 to be brought into engagement with the locking features 29 by turning the levers 27.

In the operative positon, the cartridge inlet ports 8,9 are in alignment and in sealed liquid communication with head part outlet ports 32,33. The cartridge outlet port 10 is similarly in alignment and in sealed liquid communication with a head part inlet port (not shown) on an opposite side of the head part cavity 30.

The head part 6 comprises a wireless transceiver 34 and a data processing device 35 for obtaining data and writing data to the transponder 19. The transponder 19 is within range in the operative position. The data exchanged with the transponder 19 may be processed further in a data processing system part external to the head part 6. This may result in the flow of liquid to or from the head part 6 being enabled or disabled in dependence on the result of an evaluation of data obtained from the transponder 19, for example. Applications include enabling the flow of liquid only if the data indicates that the cartridge 1 comprises liquid treatment components of the correct type and/or if the data indicates that there is sufficient treatment capacity remaining. In the same or an alternative embodiment, a blending ratio corresponding to volumetric flow rate ratio between liquid bypassing one or more liquid treatment components in the cartridge 1 and liquid led through that or those liquid treatment components may be set in dependence on data read from the transponder 19. Reference is made to WO 2014/006127 A1 or WO 2014/006128 A1, for example, for further details.

In an embodiment, a sensor (not shown) may be provided to detect that the cartridge 1 has been coupled to the head part 6 and a signal from the sensor may be used to control, e.g. initiate, data exchange between the head part transceiver 34 and the transponder 19.

Regardless of whether this is the case, the mechanical key with which the shielding part 17 is provided and the cartridge recognition component 31 preselect compatible cartridges 1.

A cartridge manufacturer can manufacture these in a range of different types and sizes. At least the cap-shaped part 2 can be identically shaped and dimensioned across at least part of the range. Consequently, the head parts 6 for use with these cartridges 1 need also differ only in terms of the cartridge recognition component 31. The manufacturer selects the appropriate vessel-shaped part 3 and the appropriate liquid treatment component or components, and, optionally, specific flow conducting parts to be connected to the ports 8-10 on the inside of the cap-shaped part 2. The liquid treatment component or components are inserted into the vessel-shaped part 3, the optional flow conducting parts are assembled to the cap-shaped part 2, and the cap-shaped part 2 is subsequently joined to the vessel-shaped part 3.

An appropriate keyed shielding part 17 is selected from a range of differently-keyed shielding parts 17. A transponder 19 is placed in the recessed part 20 of the shielding part 17 or just in the cartridge head recess 14 and the shielding part 17 is then joined to the shell. Data such as a serial number or date and time of manufacturing can be written to the transponder 19, as well as data identifying the type and size of the cartridge 1. The shielding part 17 ensures that this data remains available even if the cartridge 1 is handled in a rough manner before being coupled to the head part 6.

The invention is not limited to the embodiments described above, which may be varied within the scope of the accompanying claims. The cartridge may, for example be a gas canister, e.g. for carbon dioxide, with the head part being arranged to obtain the gas from the cartridge and lead the gas to a gas-consuming device, e.g. a carbonator for carbonating water. In such embodiments, the shell may be made of metal and the shielding part may be a moulded plastic part, for example.

The transponder may be comprised in a capsule instead of having the foil 21 as a carrier.

In the illustrated embodiment, the locking elements 28 are supported by a spindle. In an alternative embodiment, they may be arranged slidably, so as to engage locking features through a linear, e.g. rectilinear movement at an angle to the direction of insertion of the cartridge head into the head part 6.

### List of reference numerals

- 1 -: cartridge
- 2 -: cap-shaped part
- 3 -: vessel-shaped part
- 4 -: mouth of vessel-shaped part
- 5 -: reference axis
- 6 -: head part
- 7 -: projecting cartridge head section
- 8 -: upper cartridge inlet port
- 9 -: lower cartridge inlet port
- 10 -: cartridge outlet port
- 11 -: sealing element seat around upper cartridge inlet port
- 12 -: sealing element seat around lower cartridge inlet port
- 13 -: sealing element seat around cartridge outlet port
- 14 -: cartridge head recess
- 15 -: mouth of cartridge head recess
- 16 -: surface section in cartridge head recess
- 17 -: shielding part
- 18 -: outward-facing shielding part surface
- 19 -: transponder
- 20 -: recessed part of shielding part
- 21 -: foil
- 22 -: chip
- 23 -: antenna
- 24 -: key space
- 25 -: inlet connector
- 26 -: outlet connector
- 27a,b -: levers
- 28 -: locking element
- 29 -: locking feature
- 30 -: head part cavity
- 31 -: cartridge recognition component
- 32 -: upper head part outlet port
- 33 -: lower head part outlet port
- 34 -: head part transceiver
- 35 -: data processing device

## Claims

1. Cartridge for handling a fluid, comprising:
a housing comprising an impermeable shell in which at least one port (8-10) for the fluid is formed,
wherein the housing comprises a cartridge head comprising at least one of the ports (8-10),
the cartridge head being arranged for coupling to a head part (6) to place those of the ports (8-10) comprised in the cartridge head in sealed fluid communication with ports (32,33) of the head part (6); and
a transponder (19), comprising at least a wireless transceiver (22,23) and a data processing device (22) for processing data exchanged via the wireless transceiver, **characterised in that**
the transponder (19) is arranged in at least one of a recess (14) in the shell and a recess (20) in a shielding part (17) joined to the shell, and **in that**
the transponder (19) is arranged between an exterior surface (16) of the shell and the shielding part (17).

2. Cartridge according to claim 1,
wherein the shielding part (17) is formed by a rigid part.

3. Cartridge according to claim 1 or 2,
wherein the transponder (19) occupies at least part of a space at least partly bounded by the exterior surface (16) of the shell and by the shielding part (17).

4. Cartridge according to any one of the preceding claims,
wherein the transponder (19) is located between the shielding part (17) and an exterior surface (16) of a section of the shell defining the cartridge head.

5. Cartridge according to claim 4,
wherein a mechanical key for avoiding false coupling to the head part (6) is formed on an exposed side of the shielding part (17).

6. Cartridge according to claim 5,
wherein the shielding part (17) is provided with a planar exterior surface (18) on the exposed side, and
wherein the key is defined by at least one space (24) recessed with respect to the planar surface (18).

7. Cartridge according to any one of the preceding claims,
wherein the transponder (19) is arranged in a recess (14) in the shell, at least partly closed at a mouth (15) by the shielding part (17).

8. Cartridge according to claim 7,
wherein the shielding part (17) comprises an insert at least partly inserted into the recess (14).

9. Cartridge according to any one of the preceding claims,
wherein the wireless transceiver (22,23) is arranged to operate in a frequency band of the electromagnetic spectrum located between 8 kHz and 2.5 MHz.

10. Cartridge according to any one of the preceding claims,
wherein the transponder (19) comprises components comprising at least an antenna (23) and at least one electrical circuit (22), and
wherein at least one of these components (23,22) is supported on a carrier (21) distinct from the shell and the shielding part (17).

11. Cartridge according to claim 10,
wherein the carrier (21) comprises a foil.

12. Cartridge according to any one of the preceding claims,
wherein the shielding part (17) is joined to the shell by one of adhesive bonding and welding.

13. Fluid handling system, comprising:
a head part (6);
at least one cartridge (1) according to any one of the preceding claims; and
a data processing system (34,35) comprising at least a reader (34) for obtaining data from the transponder (19) of the cartridge (1).

14. Fluid handling system according to claim 13,
wherein a mechanical key is formed on an exposed side of the shielding part (17) of the cartridge,
wherein the head part (6) comprises a cartridge recognition component (31) having a complementary shape to the key, and
wherein the key and the cartridge recognition component (31) are arranged to co-operate to avoid false coupling of the cartridge head of the cartridge (1) to the head part (6).

15. Method of manufacturing a range of cartridges (1), each in accordance with at least one of claims 1-12,
wherein at least a section (7) of the shell comprised in the cartridge head of each of the cartridges (1) has a common shape and dimensions, and
wherein the shielding parts (17) joined to the respective shells of at least two of the cartridges (1) differ in shape.
